# EUROPÄISCHE PATENTSCHRIFT

(11) **EP 0 429 140 B1**
(45) Veröffentlichungstag und Bekanntmachung des Hinweises auf die Patenterteilung: **22.02.1995**
(21) Anmeldenummer: 90203055.0
(22) Anmeldetag: 19.11.1990
(51) Int. Cl.: H04N 5/12

(54) **Digitale Synchronisieranordnung**
Digital synchronizing device
Dispositif numérique de synchronisation

(30) Priorität: 24.11.1989 DE 3938887
(43) Veröffentlichungstag der Anmeldung: 29.05.1991
(73) Patentinhaber: Philips Patentverwaltung GmbH, 22335 Hamburg (DE); Philips Electronics N.V., 5621 BA Eindhoven (NL)
(72) Erfinder: Pletz-Kirsch, Gerhard, W-2000 Hamburg 62 (DE); Lenth, Jürgen, W-2000 Hamburg 54 (DE)
(74) Vertreter: von Laue, Hanns-Ulrich, Dipl.-Ing.

(56) Entgegenhaltungen:
- EP-A- 0 329 576

## Beschreibung

Die Erfindung betrifft eine digitale Synchronisieranordnung für ein Bildwiedergabegerät mit einer Synchronsignal-Trennstufe, in welcher Horizontalsynchron-Impulse aus einem der Synchronisieranordnung zugeführten, ein Horizontalsynchrongemisch enthaltenden digitalen Fernsehsignal gewonnen werden und einem Phasenregelkreis, dem die Horizontalsynchron-Impulse zwecks dessen Synchronisierung zugeführt sind.

Bei Synchronisieranordnungen dieser Art ergibt sich allgemein das Problem, daß bei gestörtem Eingangssignal das Horizontalsynchron-Gemisch nicht mehr einwandfrei identifiziert werden kann und infolgedessen falsche oder keine Horizontalsynchron-Impulse generiert werden. Dies wiederum führt dazu, daß der Phasenregelkreis außer Tritt fällt und Bildstörungen auftreten. Ähnliches gilt, wenn das Fernsehsignal Phasensprünge aufweist.

Aus der US-A- 38 19 859 ist eine analoge Horizontal-Synchronisieranordnung bekannt, bei der ein sogenanntes Fenster bei der Erkennung der im Horizontalsynchron-Gemisch enthaltenen Impulse eingesetzt wird. Dieses Fenster wird in Abhängigkeit der detektierten, in dem Horizontalsynchron-Gemisch enthaltenden Impulse geöffnet und wieder geschlossen. In dem Zeitraum, in dem das Fenster geöffnet ist, werden alle, eine bestimmte Schwelle überschreitenden Impulse als Synchronimpulse gewertet. Bei gestörtem Signal werden also gegebenenfalls innerhalb eines Fensters mehrere Impulse detektiert. Darüber hinaus entstehen bei dieser Anordnung Probleme bei Fernsehsignalen, welche Phasensprünge aufweisen, da es dann vorkommen kann, daß innerhalb des Fensters keine in dem Horizontalsynchron-Gemisch enthaltenden Impulse erkannt werden. Ein nachgeschalteter Phasenregelkreis fällt dann außer Tritt.

Aus der EP-A-0 329 576 ist eine digital arbeitende Synchronisieranordnung bekannt, bei der zu den Zeitpunkten, zu denen Synchronimpulse erwartet werden, ein Fenster geöffnet wird. Es wird dann über eine Zahl von 32 Bildzeilen hinweg beobachtet, ob in diesem Fenster Synchronimpulse auftreten. Ist dies über 32 Bildzeilen hinweg der Fall, so wird Koinzidenz des Phasenregelkreises mit dem Synchronsignal angenommen. Im umgekehrten Falle, wird, bleiben über 32 Bildzeilen hinweg die Synchronimpulse innerhalb dieses Fensters aus, davon ausgegangen, daß keine Koinzidenz vorliegt. Die dem Phasenregelkreis zugeführten Synchronimpulse selbst werden nicht verändert. Es werden damit auch die eingangs erwähnten Probleme, bei einem gestörten oder verrauschten Fernsehsignal, eine sichere Synchronisierung zu gewährleisten, nicht gelöst. Vielmehr wird bei nicht mehr richtiger Synchronisierung der phasenregelkreis auf freies Schwingen umgeschaltet.

Es ist Aufgabe der Erfindung, eine digitale Synchronisieranordnung der eingangs genannten Art zu schaffen, welche auch bei gestörtem oder verrauschtem Fernsehsignal eine sichere Synchronisierung gewährleistet.

Diese Aufgabe wird erfindungsgemäß dadurch gelöst, daß in der Synchronisieranrodnung jeweils ein Impuls eines ersten, aus dem Phasenregelkreis gewonnenen Schaltsignals zu den erwarteten Zeitpunkten der Horizontalsynchron-Impulse in deren Bereite generiert wird, daß jeweils ein Impuls eines zweiten Schaltsignals in vorgebbarem, von der Frequenz des phasenregelkreises abhängigen zeitlichen Abstand nach jedem Impuls des ersten Schaltsignals generiert wird,
daß der erste Horizontalsynchron-Impuls, welcher während eines Impulses des ersten Schaltsignals auftritt, dem phasenregelkreis zugeführt wird, nicht jedoch danach bis zum nächsten Impuls des zweiten Schaltsignals auftretende Horizontalsynchron-Impulse,
und daß, sollte während eines Impulses des ersten Schaltsignals kein Horizontalsynchron-Impuls auftreten, alle danach bis zum nächsten Impuls des ersten Schaltsignals auftretenden Horizontalsynchron-Impulse dem Phasenregelkreis zugeführt werden.

Im auf die Horizontalsynchron-Impulse synchronisierten Zustand des Phasenregelkreises liefert dieser Ausgangssignale, welche in einer definierten phasenlage zu den Horizontalsynchron-Impulsen stehen und die in bekannter Weise beispielsweise für eine Ablenkeinheit eines Bildwiedergabegerätes eingesetzt werden können.

Es besteht also eine feste zeitliche Beziehung der Ausgangssignale des Phasenregelkreises zu den Horizontalsynchron-Impulsen. Es ist daher möglich, einen Impuls zu generieren, welcher genau zu den Zeitpunkten auftritt, in denen ein Horizontalsynchron-Impuls erwartet wird, da im eingeschwungenen Zustand des Phasenregelkreises diese Zeitpunkte bekannt sind. Darüber hinaus kann dieser Impuls in einer solchen Breite generiert werden, daß er etwa die Breite der Horizontalsynchron-Impulse aufweist. Diese so generierten Impulse bilden ein erstes Schaltsignal.

Es wird darüber hinaus ein zweites Schaltsignal generiert, das in vorgegebenem zeitlichen Abstand nach jedem Puls des ersten Schaltsignals einen Impuls liefert. Die Generierung dieses zweiten Schaltsignals kann dabei beispielsweise durch Zeitverzögerung des ersten Schaltsignals oder, ebenso wie das erste Schaltsignal, aus Signalen des phasenregelkreises gewonnen werden.

Diese beiden Schaltsignale werden nun dazu eingesetzt, die detektierten Horizontalsynchron-Impulse auf Störungen zu untersuchen und gegebenenfalls unerwünschte Pulse zu unterdrücken. Dies geschieht in der Weise, daß während eines Impulses des ersten Schaltsignals zunächst festgestellt wird, ob ein Horizontalsynchron-Impuls auftritt. Ist dies in diesem Zeitraum der Fall, so wird der Impuls dem Phasenregelkreis zugeführt. Alle nach diesem Impuls des ersten Schaltsignals, jedoch vor dem nächsten Impuls des zweiten Schaltsignals auftretenden Horizontalsynchron-Impulse werden gesperrt, also nicht dem Phasenregelkreis zugeführt. Auf diese Weise ist sichergestellt, daß in dem Zeitraum zwischen der Vorderflanke des Impulses des ersten Schaltsignals und der Vorderflanke des Impulses des zweiten Schaltsignals nur genau ein Horizontalsynchron-Impuls an den phasenregelkreis weitergeleitet wird. Bei gestörtem oder stark verrauschtem Fernsehsignal wird also, auch wenn mehrere Horizontalsynchron-Impulse fälschlich in einer Austastlücke erkannt werden, nur der erste Puls an den Phasenregelkreis weitergeleitet.

Für den Fall, daß während der Dauer eines Impulses des ersten Schaltsignals kein Horizontalsynchron-Impuls auftritt, werden alle danach bis zur Vorderflanke des nächsten Impulses des ersten Schaltsignals auftretenden Horizontalsynchron-Impulse dem Phasenregelkreis zugeführt. Mit Beginn des nächsten Impulses des ersten Schaltsignals wird dann wiederum überprüft, ob während des Impulses ein Horizontalsynchron-Impuls auftritt. Sollte dies der Fall sein, Wird nach diesem Impuls bis zum nächsten Impuls des ersten Schaltsignals wiederum gesperrt. Andernfalls wird wiederum bis zum nächsten Impuls des ersten Schaltsignals alle Horizontalsynchron-Impulse an den Phasenregelkreis weitergeleitet.

Diese Synchronisieranordnung weist gegenüber den bekannten vor allem den Vorteil auf, daß innerhalb eines Fensters, das hier durch die Vorderflanken der Impulse des ersten Schaltsignals und der Vorderflanken der Impulse des zweiten Schaltsignals gebildet wird, nur genau ein Impuls an den Phasenregelkreis weitergeleitet wird. Ein weiterer Vorteil besteht darin, daß bei stark gestörtem Signal oder bei Phasensprüngen, welche insbesondere bei der Wiedergabe von Fernsehsignalen von Videorekordern auftreten, die Anordnung dennoch in der Lage ist, eine einwandfreie Synchronisierung vorzunehmen, da dann Horizontalsynchron-Impulse, die nicht mehr während der Dauer des Impulses des ersten Schaltsignals auftreten, dennoch an den Phasenregelkreis weitergeleitet werden, und zwar auch dann, wenn das Fenster an sich bereits geschlossen wäre, d.h. also, wenn der Impuls des zweiten Schaltsignals schon aufgetreten ist.

Die Anordnung ist also im Normalfall, d.h. also, wenn der Phasenregelkreis richtig auf das Fernsehsignal und das in ihm enthaltene Horizontalsynchron-Gemisch aufsynchronisiert ist und dieses ungestört ist, in der Lage, eine einwandfreie Synchronisierung zu gewährleisten, da nur genau ein Horizontalsynchron-Impuls an den Phasenregelkreis weitergeleitet wird. Sind diese Bedingungen nicht erfüllt, so werden alle Horizontalsynchron-Impulse, welche zwischen zwei Impulsen des ersten Schaltsignals auftreten, an den Phasenregelkreis weitergeleitet, um dessen Aufsynchronisieren zu ermöglichen.

Nach einer weiteren Ausgestaltung der Erfindung ist vorgesehen, daß die Horizontalsynchron-Impulse einem ersten Eingang eines ersten AND-Gatters sowie einem ersten Eingang eines zweiten AND-Gatters zugeführt sind, dessen zweitem Eingang das erste Schaltsignal zugeführt ist und dessen Ausgang mit dem RESET-Eingang eines RS-Flip-Flops verbunden ist, dessen SET-Eingang das zweite Schaltsignal zugeführt ist und dessen Ausgang mit dem zweiten Eingang des ersten AND-Gatters verbunden ist, dessen Ausgangssignal auf den Phasenregelkreis geführt ist.

Das zweite AND-Gatter liefert dann ein Ausgangssignal, wenn während eines Impulses des ersten Schaltsignals ein Horizontalsynchron-Impuls auftritt. Es wird dann das RS-Flip-Flop zurückgesetzt, woraufhin das erste AND-Gatter eventuell noch auftretende Horizontalsynchron-Impulse sperrt. Diese Sperrung wird erst aufgehoben, wenn ein Impuls des zweiten Schaltsignals auftritt, durch den das RS-Flip-Flop wieder gesetzt wird, so daß die Sperrung des ersten AND-Gatters aufgehoben wird. Diese Schaltung ist bei einfachem Aufbau leicht integrierbar.

Nach einer weiteren Ausgestaltung der Erfindung ist vorgesehen, daß dem ersten Eingang des AND-Gatters sowie dem Eingang des Phasenregelkreises jeweils ein Register vorgeschaltet ist, die beide mit dem Abtasttakt des Fernsehsignals getaktet werden.

Da in den Gattern und Flip-Flops Laufzeiten auftreten, ist es bei vielen Anwendungen zur mit einem Abtasttakt synchronen Verarbeitung vorteilhaft, diese beiden Register vorzusehen, welche die Synchronisität mit dem Abtasttakt wieder herstellt.

Nach einer weiteren Ausgestaltung der Erfindung ist vorgesehen, daß beide Schaltsignale mittels eines in dem Phasenkomparator des Phasenregelkreises vorgesehenen Zählers generiert werden, welcher mit den Abtasttakten des Fernsehsignals getaktet wird und im synchronisierten Zustand des Phasenregelkreises auf die Horizontalsynchron-Pulse aufsynchronisiert ist.

Vollständig in digitaler Technik aufgebaute Phasenregelkreise vgl. die parallele Anmeldung EP-A-0 410 523 weisen meist Phasenkomparatoren auf, in denen ein Zähler vorgesehen ist. In derartigen Phasenkomparatoren dient dieser Zähler dazu, während bestimmter Zählerstände zu überprüfen, ob der Phasenregelkreis richtig auf das Eingangssignal aufsynchronisiert ist. Es muß dann während bestimmter Zählerstände das Eingangssignal auftreten. Da der Zählerstand dieses Zählers im aufsynchronisierten Zustand des Phasenregelkreises in einer festen Beziehung zu den auftretenden Impulsen steht, kann der Zählerstand gleichzeitig dazu herangezogen werden, die beiden Schaltsignale zu den gewünschten Zeitpunkten und in der gewünschten Dauer zu generieren. Es ist dann für die Generierung der beiden Schaltsignale kein zusätzlicher Aufwand erforderlich.

Nach einer weiteren Ausgestaltung der Erfindung ist vorgesehen, daß der vorgebbare zeitliche Abstand jedes Impulses des zweiten Schaltsignals zu dem vorhergehendem Impuls des ersten Schaltsignals 50 bis 75 »sec beträgt. Für Fernsehsignale hat sich dieser zeitliche Abstand des Impulses des zweiten Signals zu der Vorderflanke des vorhergehenden Impulses des ersten Schaltsignals als vorteilhaft erwiesen, da auf diese Weise eine recht gute Unterdrückung von Störimpulsen erzielt wird. Andererseits wird die Sperrung noch nicht so lange vorgenommen, daß kein sicheres Aufsynchronisieren mehr möglich ist.

Anhand der Zeichnung wird ein Ausführungsbeispiel der Erfindung näher erläutert. Es zeigen:
Fig. 1 ein Blockschaltbild einer digitalen Synchronisieranordnung,
Fig. 2 ein Impulsdiagramm der Synchronisieranordnung nach Fig. 1 für ein gestörtes Fernsehsignal,
Fig. 3 ein weiteres Impulsdiagramm der Synchronisieranordnung für ein Fernsehsignal, welches einen Phasensprung aufweist.

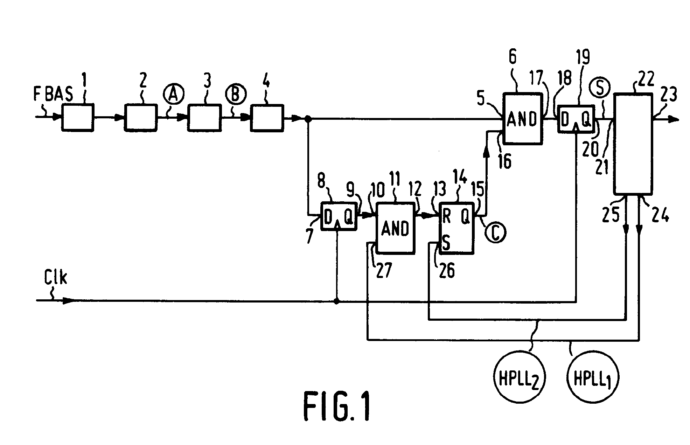

Eine in Fig. 1 dargestellte digitale Synchronisieranordnung weist eingangsseitig eine Synchronsignal-Trennstufe auf, welche mittels eines Tiefpaßfilters 1 und eines Schneidepegel-Vergleichers 2 aufgebaut ist. Dem Tiefpaßfilter 1 ist ein Fernsehsignal zugeführt, welches ein Horizontalsynchron-Gemisch enthält. Der Vergleicher 2 ist dem Tiefpaßfilter nachgeschaltet und hat die Aufgabe, das von dem Tiefpaßfilter gelieferte Signal mit einem Schneidepegel zu vergleichen. Auf diese Weise werden in dem Vergleicher die Horizontalsynchron-Impulse von dem übrigen Fernsehsignal abgetrennt. Diese so abgetrennten Impulse werden dann einem Zähler 3 zugeführt, welcher Impulse definierter Breite erzeugt. Diese Impulse definierter Breite, die die Horizontalsynchron-Impulse darstellen, sind einem Flankendetektor 4 zugeführt. Das Ausgangssignal des Flankendetektors 4 ist einem ersten Eingang 5 eines ersten AND-Gatters 6 sowie einem Eingang 7 eines Registers 8 zugeführt. Das Register 8 ist mittels eines Taktsignals Clk getaktet. Ein Ausgang 9 des Registers 8 ist mit einem ersten Eingang 10 eines zweiten AND-Gatters 11 verbunden, dessen Ausgang 12 mit dem RESET-Eingang 13 eines RS-Flip-Flops 14 verbunden ist. Ein Ausgang 15 des RS-Flip-Flops ist mit einem zweiten Eingang 16 des ersten AND-Gatters 6 verbunden. Ein Ausgang 17 des ersten AND-Gatters ist mit einem Eingang 18 eines Registers 19 verbunden, das ebenso wie das Register 8 mittels eines Taktsignals Clk getaktet ist. Ein Ausgang 20 des Registers 19 ist auf einen Eingang 21 eines Phasenregelkreises 22 geführt, der in der Figur nur schematisch dargestellt ist. Der Phasenregelkreis 22 liefert an seinem Ausgang 23 ein Signal, welches beispielsweise einer Horizontalablenkeinheit eines in der Figur nicht dargestellten Bildwiedergabegerätes zugeführt sein kann.

In Abhängigkeit dieser an dem Ausgang 23 erscheinenden Signale werden ein erstes Schaltsignal, das an einem Ausgang 24 des Phasenregelkreises 22 erscheint, sowie ein zweites Schaltsignal, welches an einen weiteren Ausgang 25 des Phasenregelkreises erscheint, erzeugt. Der Ausgang 24 des Phasenregelkreises 22 ist mit einem zweiten Eingang 27 des zweiten AND-Gatters 11 verbunden. Der Ausgang 25 des Phasenregelkreises 22 ist mit einem SET-Eingang 26 des RS-Flip-Flops 14 verbunden.

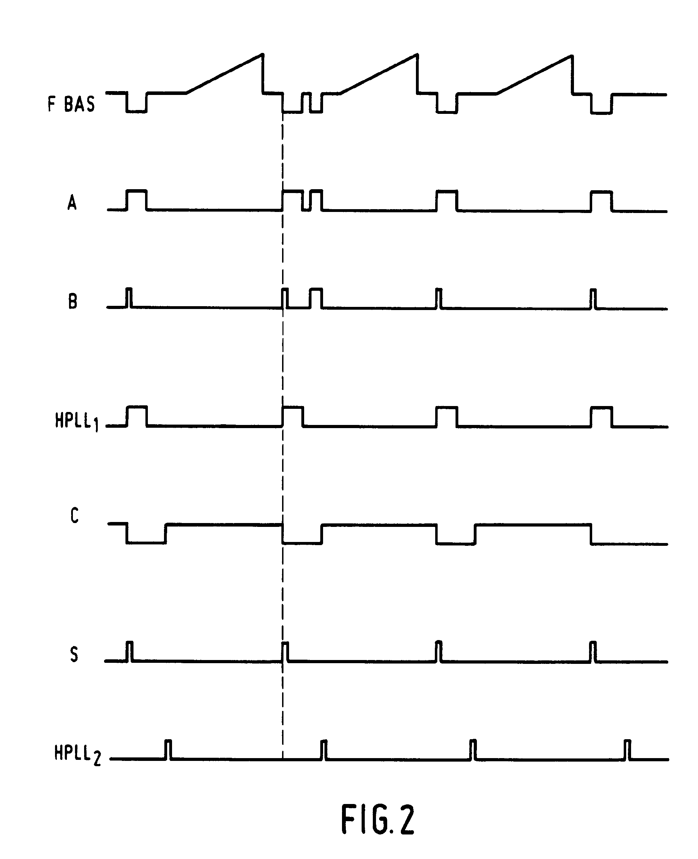

Die Funktionsweise der in der Fig. 1 dargestellten Synchronisieranordnung wird im folgenden anhand des in der Fig. 2 dargestellten Impulsdiagrammes näher erläutert.

Ein in der Fig. 2 mit FBAS gekennzeichnete Kurvenzug stellt das Eingangssignal dar, das dem Tiefpaßfilter 1 zugeführt ist. Es ist dies das komplette Fernsehsignal, welches in dem dargestellten zeitlichen Ausschnitt vier Horizontalsynchron-Impulse, sowie die dazwischenliegende aktive Bildinformation enthält. In dem in der Fig. 2 dargestellten Beispiel ist das Horizontalsynchron-Gemisch in der zweiten Austastlücke gestört.

In einem in der Fig. 2 dargestellten Kurvenzug A ist das Ausgangssignal des Vergleichers 2 dargestellt, in dem das FBAS-Signal mit einem festen Schneidepegel verglichen wird und in dem Impulse aus dem Horizontalsynchron-Gemisch generiert werden. In dem in der Figur dargestellten Kurvenzug des Signals A ist bereits erkennbar, daß in der zweiten Austastlücke zwei Impulse generiert werden.

Ein in der Fig. 2 dargestellter Kurvenzug B zeigt das Ausgangssignal des Zählers 3, in dem Impulse definierter Breite erzeugt werden. Es sind dies die Horizontalsynchron-Impulse. In der zweiten Austastlücke des in der Fig. 2 dargestellten zeitlichen Ausschnittes werden aufgrund des gestörten FBAS-Signals zwei Horizontalsynchron-Impulse generiert.

Der in der Fig. 1 dargestellte Phasenregelkreis 22 liefert ein erstes Schaltsignal, welches in der Fig. 2 mit HPLL₁ bezeichnet ist. Dieses erste Schaltsignal liefert jeweils einen Impuls genau dann, wenn Horizontalsynchron-Impulse erwartet werden. Ist nämlich der Phasenregelkreis richtig auf das Fernsehsignal FBAS aufsynchronisiert, so ist der Phasenregelkreis in der Lage, genau zu den Zeitpunkten, in denen in dem Synchronsignalgemisch einen Horizontalsynchron-Impuls erwartet wird, einen Impuls des ersten Schaltsignals zu generieren. Da die Breite der in dem Horizontalsynchron-Gemisch enthaltenen Impulse bekannt ist, können die Impulse des ersten Schaltsignals in gleicher Breite generiert werden. In einem definierten zeitlichen Abstand nach einem Impuls des ersten Schaltsignals wird jeweils ein Impuls eines zweiten Schaltsignals generiert, das in der Fig. 2 mit HPLL₂ bezeichnet ist.

Bei ungestörtem Fernsehsignal, wie dies bei dem in der Fig. 2 dargestellten Beispiel in der ersten Austastlücke der Fall ist, tritt gleichzeitig mit einem Impuls des ersten Schaltsignals HPLL₁ ein Horizontalsynchron-Impuls gemäß Kurvenzug B auf. Diese beiden Signale, die dem AND-Gatter 11 zugeführt sind, führen dazu, daß das Flip-Flop 14 zurückgesetzt wird. Das Ausgangssignal des Flip-Flops 14 ist in dem Kurvenzug C dargestellt. Während dieses Ausgangssignals des Flip-Flops C Low-Pegel hat, ist das AND-Gatter 6 gesperrt, so daß kein weiterer Horizontalsynchron-Impuls zu dem Phasenregelkreis 22 gelangen kann. Der Horizontalsynchron-Impuls, welcher während der Dauer des Impulses des ersten Schaltsignals HPLL ₁ aufgetreten ist, konnte das AND-Gatter 6 jedoch noch passieren und in das Register 19 eingelesen werden, da das Gatter 11 und das Flip-Flop 14 Laufzeiten aufweisen. Außerdem wird in diesem Ausführungsbeispiel der Puls dem zweiten AND-Gatter 11 erst mit der Verzögerung eines Taktes zugeführt, welche in dem Register 8 vorgenommen wurde. Somit wird das Flip-Flop 14 auch erst einen Takt später zurückgesetzt und das AND-Gatter 6 erst einen Takt gesperrt, nach dem der Horizontalsynchron-Impuls aufgetreten ist.

Am Ausgang des Registers 19 erscheint dann ein Impuls, der dem Phasenregelkreis zugeführt und welcher in der Fig. 2 mit S bezeichnet ist.

Der oben beschriebene Vorgang, wie er sich bei ungestörtem Eingangssignal einstellt, wie es beispielsweise in dem in Fig. 2 dargestellten Zeitraum während der ersten Austastlücke gegeben ist, führt dazu, daß bei Auftreten eines Horizontalsynchron-Impulses während eines Impulses des ersten Schaltsignals HPLL ₁ bis zum Auftreten des zweiten Schaltsignals HPLL₂ das AND-Gatter 6 keine weiteren Horizontalsynchron-Impulse an das Register 19 bzw. den Phasenregelkreis 22 weiterleitet.

Dies wird anhand der in der Fig. 2 dargestellten Kurvenzüge anhand der zweiten Austastlücke näher erläutert. In dieser Austastlücke tritt nach dem ersten Horizontalsynchron-Impuls ein weiterer auf. Dieser zweite Horizontalsynchron-Impuls tritt jedoch noch vor der Vorderflanke des zweiten Schaltsignals HPLL₂ auf, also noch bevor das RS-Flip-Flop wieder mittels dieses Signals gesetzt wurde. Dies führt dazu, daß das AND-Gatter 6 sperrt, da das Ausgangssignal C des RS-Flip-Flops noch Low-Pegel hat. Der zweite Horizontalsynchron-Impuls innerhalb der zweiten Austastlücke gelangt also nicht zu dem Register 19 und dem nachgeschalteten Phasenregelkreis 22. Dieser zweite Horizontalsynchron-Impuls, welcher nichts anderes als einen Störimpuls darstellt, wurde also vollständig unterdrückt.

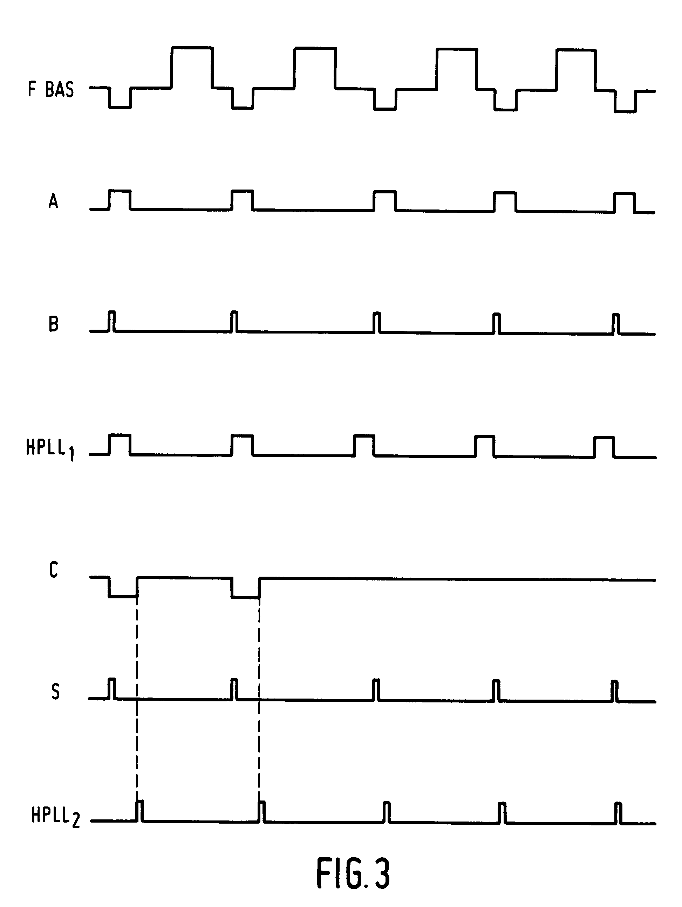

Die in Fig. 1 dargestellte digitale Synchronisieranordnung hat darüber hinaus den Vorteil, daß sie trotz der Fensterung bei Phasensprüngen des Fernsehsignals nicht sperrt, sondern die Horizontalsynchron-Impulse, auch wenn sie außerhalb des Fensters, also außerhalb des Zeitraums zwischen den Impulsen des ersten und des zweiten Schaltsignals, liegen, an den Phasenregelkreis weiterleitet. Dies wird im folgenden anhand des in Fig. 3 dargestellten Impulsdiagrammes erläutert.

Bei dem in Fig. 3 dargestellten zeitlichen Ausschnitt sind die Vorgänge in der ersten und in der zweiten Austastlücke identisch entsprechend dem Vorgang in der ersten Austastlücke des in Fig. 2 dargestellten zeitlichen Ausschnittes, da in diesem Zeiträumen das FBAS-Fernsehsignal ungestört ist. Zu Beginn der dritten, in der Fig. 3 dargestellten Austastlücke tritt jedoch ein Phasensprung auf. Dieser Phasensprung führt dazu, daß in dieser Austastlücke der Horizontalsynchron-Impuls gemäß Kurvenzug B nach dem Impuls des ersten Schaltsignals HPLL₁ auftritt. In der in Fig. 1 dargestellten Schaltung führt dies dazu, daß das AND-Gatter 11 sperrt, daß also der Horizontalsynchron-Impuls nicht dazu führt, daß das RS-Flip-Flop 14 zurückgesetzt wird. Der Ausgang 15 des RS-Flip-Flops 14 und damit auch der Eingang 16 des ersten AND-Gatters 6 führt also ständig High-Pegel. Dies wiederum hat zur Folge, daß die Horizontalsynchron-Impulse, die an den ersten Eingang 5 des AND-Gatters 6 gelangen, auch am Ausgang 17 des AND-Gatters 6 erscheinen und somit an das Register 19 bzw. den Phasenregelkreis 22 weitergeleitet werden. Diese Vorgänge sind an dem in Fig. 3 dargestellten Beispiel deutlich erkennbar. Das Ausgangssignal C des RS-Flip-Flops 14 bleibt in der dritten Austastlücke (und auch in den beiden in der Figur dargestellten darauffolgenden Austastlücken) auf High-Pegel. Dies führt dazu, daß das Ausgangssignal des Registers 19, das dem Phasenregelkreis 22 zugeführt ist, einen Impuls S führt, da dieser nicht in dem AND-Gatter 6 abgeblockt wurde.

Das Impulsdiagramm gemäß Fig. 3 zeigt also im Ergebnis, daß trotz des in der dritten Austastlücke auftretenden Phasensprunges der in dieser Austastlücke auftretende Horizontalsynchron-Impuls an das Register 19 bzw. den Phasenregelkreis 22 weitergeleitet wurde. Diese Reaktion auf Phasensprünge des FBAS-Signals ist vor allem vorteilhaft für die Wiedergabe nicht normgerechter Bildsignale, wie sie häufig beispielsweise von Videorekordern geliefert werden.

## Patentansprüche

1. Digitale Synchronisieranordnung für ein Bildwiedergabegerät mit einer Synchronsignal-Trennstufe, in welcher Horizontalsynchron-Impulse aus einem der Synchronisieranordnung zugeführten, ein Horizontalsynchrongemisch enthaltenden digitalen Fernsehsignal gewonnen werden und einem Phasenregelkreis, dem die Horizontalsynchron-Impulse zwecks dessen Synchroniserung zugeführt sind.
dadurch gekennzeichnet, daß in der Synchronisieranordnung jeweils ein Impuls eines ersten, aus dem Phasenregelkreis gewonnenen Schaltsignals zu den erwarteten Zeitpunkten der Horizontalsynchron-Impulse in deren Breite generiert wird, daß jeweils ein Impuls eines zweiten Schaltsignals in vorgebbarem, von der Frequenz des Phasenregelkreises abhängigen zeitlichen Abstand nach jedem Impuls des ersten Schaltsignals generiert wird,
daß der erste Horizontalsynchron-Impuls, welcher während eines Impulses des ersten Schaltsignals auftritt, dem Phasenregelkreis zugeführt wird, nicht jedoch danach bis zum nächsten Impuls des zweiten Schaltsignals auftretende Horizontalsynchron-Impulse,
und daß, sollte während eines Impulses des ersten Schaltsignals kein Horizontalsynchron-Impuls auftreten, alle danach bis zum nächsten Impuls des ersten Schaltsignals auftretenden Horizontalsynchron-Impulse dem Phasenregelkreis zugeführt werden.

2. Digitale Synchronisieranordnung nach Anspruch 1,
dadurch gekennzeichnet, daß die Horizontalsynchron-Impulse einem ersten Eingang eines ersten AND-Gatters sowie einem ersten Eingang eines zweiten AND-Gatters zugeführt sind, dessen zweitem Eingang das erste Schaltsignal zugeführt ist und dessen Ausgang mit dem RESET-Eingang eines RS-Flip-Flops verbunden ist, dessen SET-Eingang das zweite Schaltsignal zugeführt ist und dessen Ausgang mit dem zweiten Eingang des ersten AND-Gatters verbunden ist, dessen Ausgangssignal auf den Phasenregelkreis geführt ist.

3. Digitale Synchronisieranordnung nach Anspruch 2,
dadurch gekennzeichnet, daß dem ersten Eingang des ersten AND-Gatters sowie dem Eingang des Phasenregelkreises jeweils ein Register vorgeschaltet ist, die beide mit dem Abtasttakt des Fernsehsignals getaktet werden.

4. Digitale Synchronisieranordnung nach einem der Ansprüche 1 bis 3,
dadurch gekennzeichnet, daß beide Schaltsignale mittels eines in dem Phasenkomparator des Phasenregelkreises vorgesehenen Zählers generiert werden, welcher mit den Abtasttakten des Fernsehsignals getaktet wird und im synchronisierten Zustand des Phasenregelkreises auf die Horizontalsynchron-Impulse aufsynchronisiert ist.

5. Digitale Synchronisieranordnung nach einem der Ansprüche 2 bis 4,
dadurch gekennzeichnet, daß die in der Synchronsignal-Trennstufe gewonnenen Horizontal-Impulse vor ihrer weiteren Verarbeitung einem Flankendetektor zugeführt sind.

## Claims

1. A digital synchronizing arrangement for a picture display device, comprising a synchronizing signal separator stage in which horizontal sync pulses are gained from a digital television signal applied to the synchronizing arrangement and comprising a horizontal synchronizing signal, and a phase-locked loop to which the horizontal sync pulses are applied for its synchronization, characterized in that in the synchronizing arrangement each time a pulse of a first switching signal gained from the phase-locked loop is generated in width at the expected instants of the horizontal sync pulses, in that each time a pulse of a second switching signal is generated in a predeterminable time interval, dependent on the frequency of the phase-locked loop, after each pulse of the first switching signal, in that the first horizontal sync pulse which occurs during a pulse of the first switching signal is applied to the phase-locked loop, whereas horizontal sync pulses subsequently occurring until the next pulse of the second switching signal are not applied, and in that all horizontal sync pulses subsequently occurring until the next pulse of the first switching signal are applied to the phase-locked loop if no horizontal sync pulse were to occur during a pulse of the first switching signal.

2. A digital synchronizing arrangement as claimed in Claim 1, characterized in that the horizontal sync pulses are applied to a first input of a first AND gate and to a first input of a second AND gate whose second input receives the first switching signal and whose output is connected to the reset input of an RS flip-flop whose set input receives the second switching signal and whose output is connected to the second input of the first AND gate whose output signal is applied to the phase-locked loop.

3. A digital synchronizing arrangement as claimed in Claim 2, characterized in that the first input of the first AND gate as well as the input of the phase-locked loop are preceded by registers both of which are clocked with the sampling clock of the television signal.

4. A digital synchronizing arrangement as claimed in any one of Claims 1 to 3, characterized in that the two switching signals are generated by means of a counter arranged in the phase comparator of the phase-locked loop, which counter is clocked with the sampling clocks of the television signal and is synchronized on the horizontal sync pulses in the synchronized state of the phase-locked loop.

5. A digital synchronizing arrangement as claimed in any one of Claims 2 to 4, characterized in that the horizontal pulses gained in the synchronizing signal separator stage are applied to a slope detector before they are further processed.

## Revendications

1. Dispositif de synchronisation numérique pour un appareil de reproduction d'image comportant un étage séparateur de signaux de synchronisation, dans lequel des impulsions de synchronisation horizontale sont tirées d'un signal de télévision numérique contenant un mélange de synchronisation horizontale et acheminé au dispositif de synchronisation, et une boucle à phase asservie à laquelle les impulsions de synchronisation horizontale sont acheminées en vue de la synchronisation, caractérisé en ce que, dans le dispositif de synchronisation, chaque fois, une impulsion d'un premier signal de commutation tiré de la boucle à phase asservie est produite aux instants escomptés des impulsions de synchronisation horizontale dans leur largeur, que chaque fois une impulsion d'un deuxième signal de commutation est produite à un intervalle de temps prédéterminable dépendant de la fréquence de la boucle à phase asservie, après chaque impulsion du premier signal de commutation,
que la première impulsion de synchronisation horizontale, qui apparaît pendant une impulsion du premier signal de commutation, est acheminée de la boucle à phase asservie, mais pas les impulsions de synchronisation horizontale apparaissant ensuite jusqu'à l'impulsion suivante du deuxième signal de commutation, et
que, au cas où, pendant une impulsion du premier signal de commutation, aucune impulsion de synchronisation horizontale n'apparaît, toutes les impulsions de synchronisation horizontale apparaissant ensuite jusqu'à l'impulsion suivante du premier signal de commutation sont acheminées à la boucle à phase asservie.

2. Dispositif de synchronisation numérique selon la revendication 1, caractérisé en ce que les impulsions de synchronisation horizontale sont acheminées à une première entrée d'une première porte ET ainsi qu'à une première entrée d'une deuxième porte ET, à la deuxième entrée de laquelle le premier signal de commutation est acheminé et dont la sortie est connectée à l'entrée de remise à zéro d'une bascule RS, à l'entrée de mise à un de laquelle le deuxième signal de commutation est acheminé et dont la sortie est connectée à la deuxième entrée de la première porte ET, dont le signal de sortie est acheminé à la boucle à phase asservie.

3. Dispositif de synchronisation numérique selon la revendication 2, caractérisé en ce que l'on monte respectivement deux registres qui sont tous deux cadencés à la cadence de balayage du signal de télévision, en amont de la première entrée de la première porte ET ainsi qu'en amont de l'entrée de la boucle à phase asservie, lesdits deux registres étant cadencés par la cadence de balayage du signal de télévision.

4. Dispositif de synchronisation numérique selon l'une quelconque des revendications 1 à 3, caractérisé en ce que les deux signaux de commutation sont produits à l'aide d'un compteur prévu dans le comparateur de phase de la boucle à phase asservie, ce compteur étant cadencé par les cadences de balayage du signal de télévision et étant synchronisé sur les impulsions de synchronisation horizontale à l'état synchronisé de la boucle à phase asservie.

5. Dispositif de synchronisation numérique selon l'une quelconque des revendications 2 à 4, caractérisé en ce que les impulsions horizontales obtenues dans l'étage séparateur des signaux de synchronisation sont acheminées avant leur traitement ultérieur à un détecteur de flancs.
